# EUROPEAN PATENT SPECIFICATION

(11) **EP 2 428 907 B1**
(45) Date of publication and mention of the grant of the patent: **15.05.2013**
(21) Application number: 10176621.0
(22) Date of filing: 14.09.2010
(51) Int. Cl.: G06F 17/40, G05B 19/042

(54) **Method for monitoring origin of a liquid food preparation**
Verfahren zur Überwachung der Herkunft eines flüssigen Nahrungsmittelpräparats
Procédé de surveillance de l'origine d'une préparation alimentaire liquide

(43) Date of publication of application: 14.03.2012
(73) Proprietor: Skånemejerier AB, 205 03 Malmö (SE)
(72) Inventor: Mustafic, Armina, 264 31 Klippan (SE); Sederblad, Björn, 245 93 Staffanstorp (SE)
(74) Representative: Bergstrand, Mikael Gudmundsson

(56) References cited:
- FR-A- 1 458 196
- FR-A1- 2 526 184
- US-A- 4 394 567

## Description

The present invention relates to a method as well as a system for determining from which specific sites a portion of a liquid food preparation drawn from a storage vessel originates.

### Technical background

The food industry of today aims at providing large volumes of high quality food at a low cost. One way of reducing production costs and at the same time ensuring high quality is to concentrate production to a few large manufacturing facilities. However, a consequence of such a concentrated production is that the raw material often is obtained from a large geographical area and could originate from a huge amount of small local producers.

Although the quality of the final product is maintained by the large scale production, there is a risk that the consumers loose contact with the original producers, or the farmers. Food constitutes a substantial part of the consumers' cultural heritage and there is an increasing demand for more information regarding origin of different kinds of food. Furthermore, there are also safety and quality aspects to consider. In case of accidents leading to reduced quality or outbreaks of infectious diseases in a certain area, it is important to be able to trace food preparations originating from that area. There are also increasing governmental demands on the food industry regarding traceability and statements regarding origin of a food product.

For obvious reasons, there are special difficulties regarding traceability and determination of origin of a liquid food product or preparation. It is not practically possible to transport such products or preparations to the processing plant in separate compartments. Instead, batches of different origin are typically combined in tanks. It is not possible to separate each batch from such a mixture, and it is normally not possible to determine origin of original batches contained in a mixture by chemical or physical analysis methods.

US 4,394,567 discloses a system for recording data, which data relate to milk lots to be delivered to a central collecting station. A recorder installed on the collecting vehicle comprises the normally existing data memory and closely adjacent thereto a second memory, which has preferably the same structure and serves to store those data which are required in an analytical laboratory for an analysis of samples taken from the lots as they were collected. These data are recorded in the second memory under the control of a selector. By means of the second memory, a separate data carrier is provided, which is delivered to the analytical laboratory, in which data representing the result of the various analyses are recorded on said data carrier so as to supplement the data originally recoded thereon.

FR 2,526,184 relates to a method and an apparatus for acquisition, automatic capture and processing data obtained on site, where said apparatus is intended to be movable. In particular, the method and apparatus could be used in the dairy industry for transferring data relating to milk collection.

FR 1,458,196 relates to a method and an apparatus for transporting milk to a dairy and for carrying out a quantitative and qualitative control of the milk.

Accordingly, there is a need for an efficient method for determine and/or monitoring origin of a liquid food preparation.

### Summary of the invention

The invention solves the above mentioned problem by providing the method according to the appending claims.

In a first aspect, the present invention provides a method for monitoring composition of original batches (C_{original}) of a portion of a liquid food preparation drawn off from a storage vessel as a function of time, said liquid food preparation being prepared by combining a plurality of incoming batches, where each of said incoming batches is composed of at least one original batch, where each of said original batches has been produced at a specific site of origin, comprising:
a) determining volume (Vᵢₙ), and composition of original batches (Cᵢₙ) for each incoming batch to be added to said liquid food preparation in said storage vessel;
b) directly after addition of an incoming batch to said liquid food preparation in said storage vessel, updating the total volume (Vₚᵣₑₚ), and composition of original batches (C_{original}) of the liquid food preparation in said storage vessel, taking the volume and composition of original batches of the liquid food preparation in said storage vessel before addition of said incoming batch into account;
c) directly after drawing off a portion of said liquid food preparation from said storage vessel, updating said total volume (Vₚᵣₑₚ) of the liquid preparation in the storage vessel; and
d) recording the specific time when said portion of said liquid food preparation was drawn off together with the composition of original batches (C_{original}) in a database.

In a second aspect the invention provides a method for determining from which specific sites of origin a portion of a liquid food preparation drawn off from a storage vessel originates, comprising the steps of:
i) providing a database comprising data regarding the composition of original batches (C_{original}) of a portion of a liquid food preparation at specific draw-off times as well as the specific sites of origin from which the original batches originates, where said data has been obtained by a method according to said first aspect;
ii) providing data identifying the specific point of time when said portion of a liquid food preparation was drawn from said storage vessel; and
iii) identifying the specific sites of origin where the original batches contained in the liquid food preparation were produced by using the information in said database.

In a third aspect, the present invention provides a system for carrying out the method of said second aspect, said system comprising:
aa) a plurality of means for measuring volume V_{batch} of an original batch of a liquid food preparation transferred to a transport tank as well as indicating the specific time T_{batch} and specific site of origin for the transfer, said means being set up for forwarding data regarding volume, time and specific site of origin to a data collection unit;
bb) a means for registering data regarding specific identity of a transport tank and the specific time when the liquid food preparation content of said transport tank is transferred to a storage vessel, said means being set up to send said identity data and time data to a data collection unit;
cc) a means for measuring volume Vₒᵤₜ of portions of liquid food preparation drawn off said storage vessel and the time when drawing off a portion of said preparation, said means being set up to send said data regarding portion volume and time to a data collection unit;
dd) a data collection unit set up to collect data regarding volume, time and geographic location from said means for measuring volume V_{batch} of an original batch of a liquid food preparation transferred to a transport tank, said data collection unit also being set up to collect identity data and time data from said means for registering data regarding specific identity of a transport tank, said data collection unit also being set up to collect data regarding portion volume and time from said means for measuring volume Vₒᵤₜ of portions of liquid food preparations drawn out of said storage vessel, said data collection unit, said data collection unit also being set up to provide said data to a calculation unit;
ee) a calculation unit set up to determine specific sites of origin of original batches of a portion of a liquid food preparation drawn off from a storage vessel as a function of time of processing or packaging in accordance with the method according to said first aspect based on the information provided in said data collection unit, and then to transfer the information to a database unit; and
ff) a database unit set up to store information obtained from the calculation unit regarding origin of original batches in a portion of a liquid food preparation drawn off from a storage vessel as a function of time of packaging or processing.

### Short description of the enclosed figures:

The present invention will now be further described with reference to the enclosed figures, in which:
Fig. 1 discloses a simplified overview of a system for determining from which specific sites of origin a portion of a liquid food preparation drawn off from a storage vessel originates;
Fig. 2 shows an example of a web-based interface for determining from which specific sites of origin a portion of a liquid food preparation drawn off from a storage vessel originates; and
Fig. 3 presents an example of a presentation of a specific site of origin.

### Detailed description of the invention

As already mentioned, the present invention provides, in a first aspect, a method for monitoring composition of original batches (C_{original}) of a portion of a liquid food preparation drawn off from a storage vessel (7) as a function of time, said liquid food preparation being prepared by combining a plurality of incoming batches, where each of said incoming batches is composed of at least one original batch, where each of said original batches has been produced at a specific site of origin (3), comprising:
a) determining volume (Vᵢₙ), and composition of original batches (Cᵢₙ) for each incoming batch to be added to said liquid food preparation in said storage vessel;
b) directly after addition of an incoming batch to said liquid food preparation in said storage vessel, updating the total volume (Vₚᵣₑₚ), and composition of original batches (C_{original}) of the liquid food preparation in said storage vessel, taking the volume and composition of original batches of the liquid food preparation in said storage vessel before addition of said incoming batch into account;
c) directly after drawing off a portion of said liquid food preparation from said storage vessel, updating said total volume (Vₚᵣₑₚ) of the liquid preparation in the storage vessel; and
d) recording the specific time when said portion of said liquid food preparation was drawn off together with the composition of original batches (C_{original}) in a database.

As disclosed herein, the term "liquid food preparation" relates to types of liquid food that is produced in specific local units, such as farms and plantations. In the present disclosure, there is a special focus on milk and other kinds of liquid dairy products. However, a liquid food preparation in accordance with the present invention could also be a juice preparation made of different kinds of fruit and/or vegetables. Another example is an oil preparation, such as olive oil, sunflower oil, or rape oil.

As disclosed herein, the term "specific site of origin" relates to the local unit where a certain liquid food preparation is produced. As mentioned above, such a local unit could be a farm or a plantation.

As disclosed herein, the term "original batch" relates to a batch of a liquid food preparation that has been produced at only one specific site of origin.

As disclosed herein, the term "composition of original batches", abbreviated C_{original}, relates to the amount of original batches in a mixture of such batches and their relative content. For example, tank lorries transporting milk from farms to a dairy plant normally pick up milk from more than one farm. C_{original} of the resulting mixture delivered to the dairy plant is accordingly the relative amounts in vol.-% of each original batch contained in the total resulting mixture in the tank of the tank lorry.

As disclosed herein, the term "incoming batch" relates to a batch that is about to be added to a storage vessel. An example of a storage vessel in the context of the present invention is a silo tank at a dairy plant. An incoming batch could be made up of a mixture of original batches. Alternatively, it could be constituted of a single original batch.

In a preferred embodiment of the first aspect of the present invention, the composition of original batches of an incoming batch is determined in accordance with steps a) - c) disclosed above in case the incoming batch is comprised of several batches and that it is assigned to 100 % from a specific site in case the incoming batch originates from a specific site of origin.

In a second aspect the present invention provides a method for determining from which specific sites of origin a portion of a liquid food preparation drawn off from a storage vessel (7) originates, comprising the steps of:
i) providing a database (16) comprising data regarding the composition of original batches (C_{original}) of a portion of a liquid food preparation at specific draw-off times as well as the specific sites of origin from which the original batches originates, where said data has been obtained by a method according to the first aspect;
ii) providing data identifying the specific point of time when said portion of a liquid food preparation was drawn from said storage vessel (7); and
iii) identifying the specific sites of origin where the original batches contained in the liquid food preparation were produced by using the information in said database.

In a preferred embodiment of the second aspect of the present invention, said liquid food preparation is a milk preparation, a fruit juice preparation, a vegetables juice preparation, or a vegetable oil preparation.

Sometimes the liquid food preparation only contains minor amounts of original batches from some specific sites of origin. In order to increase clarity of the response provided by the method and also to reduce bandwidth, it is preferred that only specific sites of origin relating to original batches present in an amount of more than a specific minimum amount of the liquid food preparation are identified. Typically, such a specific minimum amount may be within the range of 1 - 10 vol-%, preferably 2 - 8 vol-%, and most preferably 3 - 5 vol-%.

In a third aspect the present invention provides a system for carrying out the method of the second aspect of the present invention, said system comprising:
aa) means (4a, 4b, 4c, 4d, 4e, 4f, 4g, 4h) for measuring volume V_{batch} of an original batch of a liquid food preparation transferred to a transport tank (5a, 5b) as well as indicating the specific time T_{batch} and specific site of origin for the transfer, said means being set up for forwarding data regarding volume, time and specific site of origin to a data collection unit (14);
bb) a means (6) for registering data regarding specific identity of a transport tank (5a, 5b) and the specific time when the liquid food preparation content of said transport tank is transferred to a storage vessel (7), said means being set up to send said identity data and time data to a data collection unit (14);
cc) a means (8) for measuring volume Vₒᵤₜ of portions of liquid food preparation drawn off said storage vessel (7) and the time when drawing off a portion of said preparation, said means being set up to send said data regarding portion volume and time to a data collection unit (14);
dd) a data collection unit (14) set up to collect data regarding volume, time and specific site of location from said means (4a, 4b, 4c, 4d, 4e, 4f, 4g, 4h) for measuring volume V_{batch} of an original batch of a liquid food preparation transferred to a transport tank (5a, 5b), said data collection unit (14) also being set up to collect identity data and time data from said means (6) for registering data regarding specific identity of a transport tank (5a, 5b), said data collection unit (14) also being set up to collect data regarding portion volume and time from said means (8) for measuring volume Vₒᵤₜ of portions of liquid food preparations drawn out of said storage vessel, said data collection unit, said data collection unit (14) also being set up to provide said data to a calculation unit (15);
ee) a calculation unit (15) set up to determine specific sites of origin of original batches of a portion of a liquid food preparation drawn off from a storage vessel (7) as a function of time of processing or packaging in accordance with the method according to the first aspect based on the information provided in said data collection unit (14), and then to transfer the information to a database unit (16); and
ff) a database unit (16) set up to store information obtained from the calculation unit (15) regarding origin of original batches in a portion of a liquid food preparation drawn off from a storage vessel (7) as a function of time of packaging or processing.

In a preferred embodiment, said system also comprises a user interface unit (17) set up to enable a user to enter time data relating to packaging or processing of a liquid food preparation, said user interface unit (17) also being set up to provide information regarding specific site of origin of original batches corresponding to said entered time data.

It is still more preferred that the interface unit is set up to enable the user to enter time data and to obtain corresponding information regarding specific site of origin of original batches through a web page on the internet or through a mobile phone application.

In a preferred embodiment, said means (4a, 4b, 4c, 4d, 4e, 4f, 4g, 4h) for measuring volume V_{batch} of an original batch of a liquid food preparation transferred to a transport tank (5a, 5b) comprise flow sensors, or volume measurement means. There are no special requirements regarding flow sensors or volume sensors. Furthermore, the means could be located on the transport tank or at the specific site of origin.

In a preferred embodiment, said specific site of origin data is GPS data.

In a preferred embodiment, said means (6) for registering data regarding specific identity of a transport tank (5a, 5b) comprises an automatic identification means adapted for reading an identification code means on said transport tank (5a, 5b). Alternatively, said means (6) for registering data regarding specific identity of a transport tank (5a, 5b) comprises means for manually entering an identification code.

In a preferred embodiment, said system also comprises a means (10) for monitoring process time for said portion of the liquid food preparation leaving said storage vessel (7), said means being set up to transfer said process time data to said data collection unit (14). It is still more preferred that said data collection unit (14) is set up to provide said process time data to said calculation unit (15), and that said calculation unit (15) is being set up to take said processing time into account when determining the specific origin of original batches of a liquid food preparation drawn off from a storage vessel (7). Alternatively, in case the process time from drawing off the liquid food preparation from storage vessel (7) to the marking step (12) of the finished package (13) can be predicted with high accuracy, it is not necessary to send specific process time data to said calculation unit (15). Instead, said calculation means could then be set up take such a predictable processing time into account.

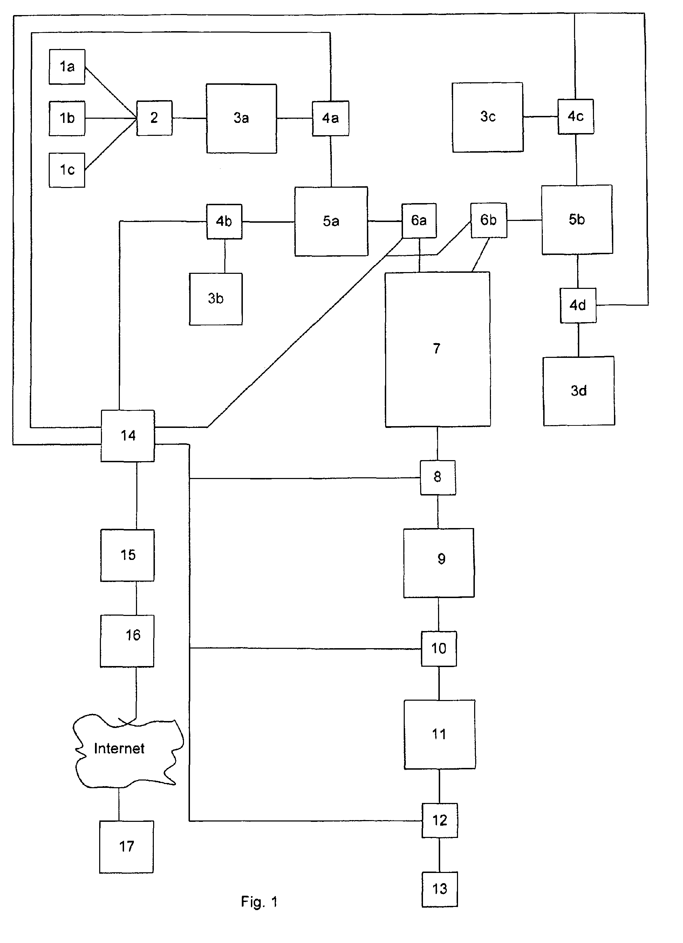

As mentioned above, Fig. 1 discloses a simplified overview of a system for determining from which specific sites of origin a portion of a liquid food preparation drawn off from a storage vessel originates. The specific example shown in Fig. 1 is based on production and packaging of milk but the technology could be applied to other kinds of liquid food products, such as juice of fruit and vegetables. Referring to Fig. 1, milk is produced by cows 1a, 1 b, 1c. During milking, the milk is transported by way of flow sensor 2 to a storage tank 3a, 3b, 3c, 3d at the local farm. Means 2 for measuring flow or volume continuously monitors milk flow and specific points of time when the flow commenced and ended. Means 2 may also add information about which cow that has produced a certain quantity of milk. Accordingly, this information renders it possible to calculate the exact volume that has passed through means 2 and the identity of the producing cow. The milk is then transferred to a tank 5a, 5b of a tank lorry through flow/volume sensor 4a, 4b, 4c, 4d. Flow/volume sensor 4a, 4b, 4c, 4d is either located on the tank 5a, 5b of a tank lorry or on storage tank 3a, 3b, 3c, 3d. Similar to sensor 2, it continuously monitors milk flow or transferred volume and specific points of time when the flow commenced and ended. Furthermore, sensor 4a, 4b, 4c, 4d adds information about from which farm the milk has been collected. When the milk from the local farm has been added to tank 5a, 5b of the tank lorry, said lorry may load milk from storage tanks 3b, 3c, 3d at other farms too using the same kind of equipment. The milk is transported to the diary and added through flow sensor 6a, 6b to silo tank/storage vessel 7. The milk preparation in storage vessel 7 is forwarded in portions to process step 9 for manufacturing products like cream, milk, youghurt, etc, and finally to packaging step 11. The flow is monitored by flow/volume sensors 8, 10. Packaged products are stamped with packaging time data in a stamping step 12, and the final products are released in a final step 13. Means 4a, 4b, 4c, 4d, 6a, 6b, 8, and 10 all forward data to a data collection unit 14. The data collection unit then provides said data to a calculation means 15. The calculation means 15 calculates composition of original batches of the milk preparation in a particular package as a function of time data stamped on said package, based upon the information provided by data collection unit 14. The result of this calculation is stored in database 16. A user seeking information about the composition of original batches of a milk preparation in a particular package stamped with time data may then submit said time data through interface 17 and subsequently obtain such data through interface 17.

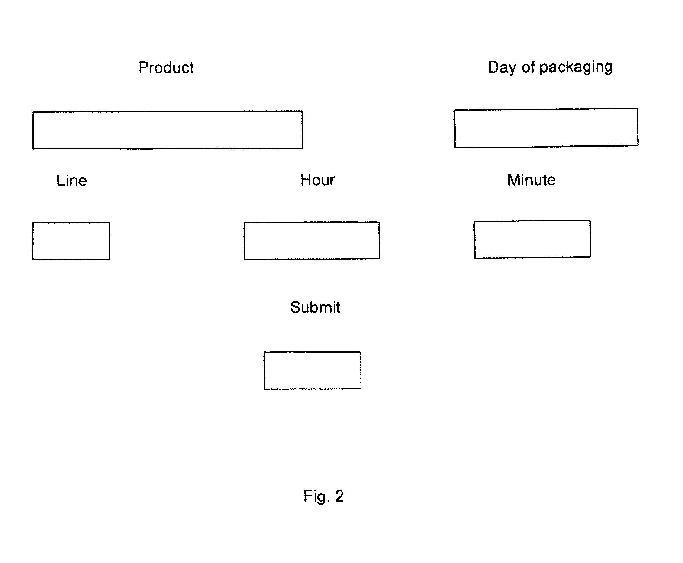

Fig. 2 discloses a web-based interface for determining from which specific sites of origin a portion of a liquid food preparation drawn off from a storage vessel originates. More specifically, the web interface must comprise fields for entering date and time for packaging and/or drawing off a particular portion from storage vessel 7 in order to enable identifying from which specific sites of origin the liquid food preparation originates. Preferably, the interface also comprises fields for entering product type and production line, in particular if the production plant comprises several production lines and manufactures several product types.

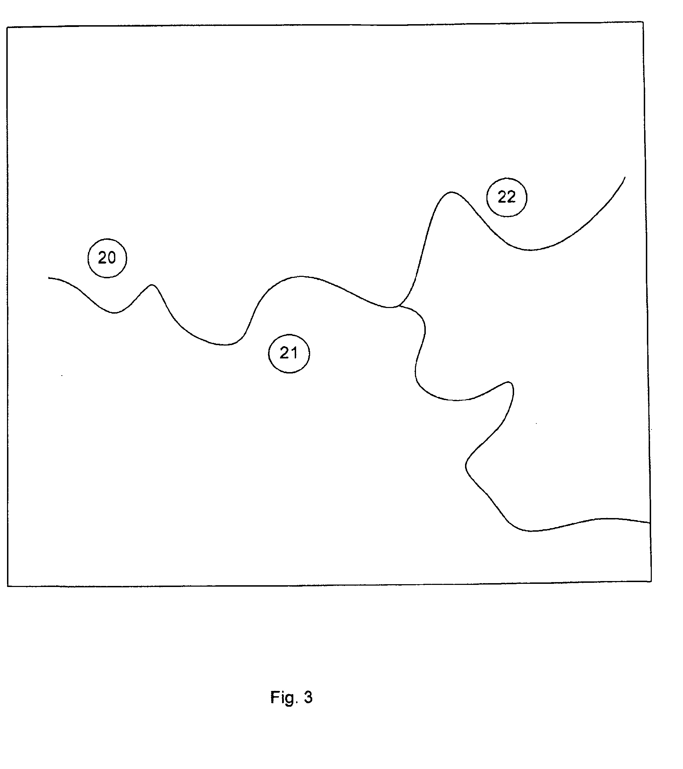

Fig. 3 outlines an example of information about a specific site of origin that could be provided in a web page by the system according to the invention after a user has submitted a search query by using the interface shown in Fig. 2. Typically, the system provides a map over the area where the liquid food preparation originates and the specific sites of origin (20, 21, 22) are shown as clickable symbols. After clicking on such a symbol, a web page containing specific information about the specific site of origin is displayed.

Alternatively, instead of providing a map of the area, the system could disclose information about the specific sites of origin directly. Furthermore, instead of using a web-based interface, a user could search the above mentioned information by using a mobile phone application set up in an analogous way.

The present invention will now be further described with reference to following specific examples.

### Example 1: A system for determining specific site of origin of a milk preparation

Milk is collected from farms in large tank lorries. When the milk is transferred from the farm to the tank lorry, information is forwarded to a computer system about time, volume and GPS coordinates regarding farm sites. The computer system also comprises a database containing information about, among all, tank lorry routes, volumes and milk suppliers.

The tank lorries are then driven to the dairy in order to unload the milk. The tank lorry entrance at the dairy plant is equipped with RFID (Radio Frequency Identification) readers. Each reader is connected to a couple of antennae. When a tank lorry has reached a space for unloading, such an antenna scans a tag mounted on the tank lorry. The tag provides the RFID reader with a unique ID number associated with the particular tank lorry. The computer system contains information about tank lorry routes and farms along said route. The ID number is forwarded to the computer system together the specific time when the ID number was registered and all this information is subsequently stored in a database.

The processes of the dairy plant are controlled by a SattLine computer program. This computer program controls and monitors all processes of the dairy plant. Valves, tank volumes, temperatures and packaging times are examples of what is controlled and monitored by the program. The SattLine program is connected to an OPC (Object Linking and Embedding for Process Control) server, which in turn is connected to the PLC network of the dairy plant. OPC is a specific standard enabling communication between Windows software and industrial hardware units. Milk flow is monitored once a minute and all data is stored in the above mentioned database.

All data in the database are rearranged and recalculated once every 24 hours in accordance with the method of the present claims. When a package has been filled, it is stamped with packaging date, time and packaging line. This package data can then be used as a search query in a web-based user interface communicating with said data base. Upon entry of such a search query, the computer system is set up to present data regarding the farms that have supplied the milk in said package.

### Example 2: A system for determining specific site of origin of a milk preparation

Milk is collected from farms in large tank lorries. When the milk is transferred from the farm to the tank of the tank lorry, information about time, volume and GPS coordinates regarding farm sites is forwarded to a computer system and structured in a database. When a tank lorry arrives at the diary plant, the driver has to manually enter an identification code on key pad, before unloading the milk. As the computer system associates the identification code with specific routes and farm sites, the unloaded milk can be associated with data specific site of origin data already submitted to the system. The processes at the dairy plant are controlled and monitored by a SCADA (Supervisory Control And Data Acquisition) system. Valves, tank volumes, temperatures and packaging times are examples of what is controlled and monitored by the program. Milk flow is monitored once a minute and all data is stored in the above mentioned database.

All data in the database are rearranged and recalculated once every 24 hours in accordance with the method of the present claims. When a package has been filled, it is stamped with packaging date, time and packaging line. This package data can then be used as a search query in a web-based user interface communicating with said data base. Upon entry of such a search query, the computer system is set up to present data regarding the farms that have supplied the milk in said package.

## Claims

1. A method for determining from which specific sites of origin a portion of a liquid food preparation drawn off from a storage vessel (7) originates, said liquid food preparation being prepared by combining a plurality of incoming batches, where each of said incoming batches is composed of at least one original batch, where each of said original batches has been produced at a specific site of origin (3), said method involving determination of volume (Vᵢₙ) for each of said original batches, **characterized in that** it comprises the steps of:
i) providing a database (16) comprising data regarding the composition of original batches (C_{original}) of a portion of a liquid food preparation at specific draw-off times as well as the specific sites of origin from which the original batches originates, where said data has been obtained by a method comprising the steps of;
a) determining volume (Vᵢₙ), and composition of original batches (Cᵢₙ) for each incoming batch to be added to said liquid food preparation in said storage vessel, where the composition of original batches (Cᵢₙ) is assigned to 100 % from a specific site in case the incoming batch originates from a specific site of origin;
b) directly after addition of an incoming batch to said liquid food preparation in said storage vessel, updating the total volume (Vₚᵣₑₚ), and composition of original batches (C_{original}) of the liquid food preparation in said storage vessel, taking the volume and composition of original batches of the liquid food preparation in said storage vessel before addition of said incoming batch into account;
c) directly after drawing off a portion of said liquid food preparation from said storage vessel, updating said total volume (Vₚᵣₑₚ) of the liquid preparation in the storage vessel; and
d) recording the specific time when said portion of said liquid food preparation was drawn off together with the composition of original batches (C_{original}) in a database;
ii) providing data identifying the specific point of time when said portion of a liquid food preparation was drawn from said storage vessel (7); and
iii) identifying the specific sites of origin where the original batches contained in the liquid food preparation were produced by using the information in said database.

2. A method according to claim 1, **characterized in that** said liquid food preparation is a milk preparation, a juice preparation of fruit or vegetables, or a vegetable oil preparation.

3. A method according to claim 1 or claim 2, **characterized in that** only specific sites of origin relating to original batches present in more than a specific minimum amount of the liquid food preparation are identified.

4. A system for carrying out the method of any of claims 1- 3, said system comprising:
aa) means (4a, 4b, 4c, 4d, 4e, 4f, 4g, 4h) for measuring volume V_{batch} of an original batch of a liquid food preparation transferred to a transport tank (5a, 5b) as well as indicating the specific time T_{batch} and specific site of origin for the transfer, said means being set up for forwarding data regarding volume, time and specific site of origin to a data collection unit (14);
bb) a means (6) for registering data regarding specific identity of a transport tank (5a, 5b) and the specific time when the liquid food preparation content of said transport tank is transferred to a storage vessel (7), said means being set up to send said identity data and time data to a data collection unit (14);
cc) a means (8) for measuring volume Vₒᵤₜ of portions of liquid food preparation drawn off said storage vessel (7) and the time when drawing off a portion of said preparation, said means being set up to send said data regarding portion volume and time to a data collection unit (14);
dd) a data collection unit (14) set up to collect data regarding volume, time and geographic location from said means (4a, 4b, 4c, 4d, 4e, 4f, 4g, 4h) for measuring volume V_{batch} of an original batch of a liquid food preparation transferred to a transport tank (5a, 5b), said data collection unit (14) also being set up to collect identity data and time data from said means (6) for registering data regarding specific identity of a transport tank (5a, 5b), said data collection unit (14) also being set up to collect data regarding portion volume and time from said means (8) for measuring volume Vₒᵤₜ of portions of liquid food preparations drawn out of said storage vessel, said data collection unit, said data collection unit (14) also being set up to provide said data to a calculation unit (15);
ee) a calculation unit (15) set up to determine specific sites of origin of original batches of a portion of a liquid food preparation drawn off from a storage vessel (7) as a function of time of processing or packaging in accordance with the method according to any of claims 1 - 2 based on the information provided in said data collection unit (14), and then to transfer the information to a database unit (16); and
ff) a database unit (16) set up to store information obtained from the calculation unit (15) regarding origin of original batches in a portion of a liquid food preparation drawn off from a storage vessel (7) as a function of time of packaging or processing.

5. A system according to claim 4, **characterized in that** it also comprises a user interface unit (17) set up to enable a user to enter time data relating to packaging or processing of a liquid food preparation, said user interface unit (17) also being set up to provide information regarding specific site of origin of original batches corresponding to said entered time data.

6. A system according to claim 5, **characterized in that** the interface unit is set up to enable the user to enter time data and to obtain corresponding information regarding specific site of origin of original batches through a web page on the internet or through a mobile phone application.

7. A system according to any of claims 4 - 6, **characterized in that** said means (4a, 4b, 4c, 4d, 4e, 4f, 4g, 4h) for measuring volume V_{batch} of an original batch of a liquid food preparation transferred to a transport tank (5a, 5b) comprise flow sensors, or volume measurement means, and **in that** said means could be arranged on the transport tank or at the specific site of origin.

8. A system according to any of claims 4 - 7, **characterized in that** said specific site of origin data is GPS data.

9. A system according to any of claims 4 - 8, **characterized in that** said means (6) for registering data regarding specific identity of a transport tank (5a, 5b) comprises an automatic identification means adapted for reading an identification code means on said transport tank (5a, 5b).

10. A system according to any of claims 4 - 8, **characterized in that** said means (6) for registering data regarding specific identity of a transport tank (5a, 5b) comprises means for manually entering an identification code.

11. A system according to any of claims 4 - 10, **characterized in that** it also comprises a means (10) for monitoring process time for said portion of the liquid food preparation leaving said storage vessel (7), said means being set up to transfer said process time data to said data collection unit (14).

12. A system according to claim 11, **characterized in that** said data collection unit (14) is set up to provide said process time data to said calculation unit (15), and that said calculation unit (15) is being set up to take said processing time into account when determining the specific origin of original batches of a liquid food preparation drawn off from a storage vessel (7).

## Patentansprüche

1. Verfahren zum Bestimmen, von welchen spezifischen Herkunftsstellen ein Teil eines flüssigen Nahrungsmittelpräparates, das einem Lagerbehälter (7) entnommen wurde, stammt, wobei das flüssige Nahrungsmittelpräparat durch Vereinen mehrerer zugeleiteter Chargen hergestellt wird, wobei jede der zugeleiteten Chargen aus mindestens einer ursprünglichen Charge besteht, wobei jede der ursprünglichen Chargen an einer spezifischen Herkunftsstelle (3) erzeugt wurde, wobei das Verfahren das Bestimmen des Volumens (Vᵢₙ) für jede der ursprünglichen Chargen beinhaltet, **dadurch gekennzeichnet, dass** es die folgenden Schritte umfasst:
i) Vorsehen einer Datenbank (16), umfassend Daten bezüglich der Zusammensetzung ursprünglicher Chargen (C_{original}) eines Teils eines flüssigen Nahrungsmittelpräparates zu spezifischen Entnahmezeitpunkten wie auch der spezifischen Herkunftsstellen, von welchen die ursprünglichen Chargen stammen, wobei die Daten durch ein Verfahren erhalten wurden, das die folgenden Schritte umfasst:
a) Bestimmen des Volumens (Vᵢₙ) und der Zusammensetzung ursprünglicher Chargen (Cᵢₙ) für jede zugeleitete Charge, die dem flüssigen Nahrungsmittelpräparat in dem Lagerbehälter zugesetzt werden soll, wobei die Zusammensetzung ursprünglicher Chargen (Cᵢₙ) zu 100% einer spezifischen Stelle zugeordnet wird, sollte die zugeleitete Charge von einer spezifischen Herkunftsstelle stammen;
b) direkt nach dem Zusetzen einer zugeleiteten Charge zu dem flüssigen Nahrungsmittelpräparat in dem Lagerbehälter Aktualisieren des Gesamtvolumens (Vₚᵣₑₚ) und der Zusammensetzung ursprünglicher Chargen (C_{original}) des flüssigen Nahrungsmittelpräparats im Lagerbehälter unter Berücksichtigung des Volumens und der Zusammensetzung ursprünglicher Chargen des flüssigen Nahrungsmittelpräparates im Lagerbehälter vor dem Zusetzen der zugeleiteten Charge;
c) direkt nach der Entnahme eines Teils des flüssigen Nahrungsmittelpräparates aus dem Lagerbehälter Aktualisieren des Gesamtvolumens (Vₚᵣₑₚ) des flüssigen Präparates im Lagerbehälter; und
d) Aufzeichnen des spezifischen Zeitpunkts, zu dem der Teil des flüssigen Nahrungsmittelpräparates entnommen wurde, gemeinsam mit der Zusammensetzung ursprünglicher Chargen (C_{original}) in einer Datenbank;
ii) Bereitstellen von Daten, die den spezifischen Zeitpunkt identifizieren, zu dem der Teil eines flüssigen Nahrungsmittelpräparates dem Lagerbehälter (7) entnommen wurde; und
iii) Identifizieren der spezifischen Herkunftsstellen, wo die ursprünglichen Chargen, die in dem flüssigen Nahrungsmittelpräparat enthalten sind, erzeugt wurden, unter Verwendung der Informationen in der Datenbank.

2. Verfahren nach Anspruch 1, **dadurch gekennzeichnet, dass** das flüssige Nahrungsmittelpräparat ein Milchpräparat, ein Saftpräparat aus Früchten oder Gemüse oder ein pflanzliches Ölpräparat ist.

3. Verfahren nach Anspruch 1 oder Anspruch 2, **dadurch gekennzeichnet, dass** nur spezifische Herkunftsstellen identifiziert werden, die sich auf ursprüngliche Chargen beziehen, die in mehr als einer spezifischen Mindestmenge des flüssigen Nahrungsmittelpräparates vorhanden sind.

4. System zum Durchführen des Verfahrens nach einem der Ansprüche 1 bis 3, wobei das System umfasst:
aa) ein Mittel (4a, 4b, 4c, 4d, 4e, 4f, 4g, 4h) zum Messen eines Volumens V_{batch} einer ursprünglichen Charge eines flüssigen Nahrungsmittelpräparates, die in einen Transporttank (5a, 5b) überführt wird, wie auch zum Angeben des spezifischen Zeitpunkts T_{batch} und der spezifischen Herkunftsstelle für die Überführung, wobei das Mittel zum Weiterleiten von Daten, die sich auf Volumen, Zeitpunkt und spezifische Herkunftsstelle beziehen, an eine Datensammeleinheit (14) eingerichtet ist;
bb) ein Mittel (6) zum Registrieren von Daten bezüglich einer spezifischen Identität eines Transporttanks (5a, 5b) und des spezifischen Zeitpunkts, zu dem der flüssige Nahrungsmittelpräparatinhalt des Transporttanks zu einem Lagerbehälter (7) überführt wird, wobei das Mittel zum Senden der Identitätsdaten und Zeitdaten an eine Datensammeleinheit (14) eingerichtet ist;
cc) ein Mittel (8) zum Messen eines Volumens Vₒᵤₜ von Teilen eines flüssigen Nahrungsmittelpräparates, die dem Lagerbehälter (7) entnommen werden, und des Zeitpunktes der Entnahme eines Teiles des Präparates, wobei das Mittel zum Senden der Daten bezüglich Teilvolumen und Zeitpunkt an eine Datensammeleinheit (14) eingerichtet ist;
dd) eine Datensammeleinheit (14), die zum Sammeln von Daten bezüglich Volumen, Zeitpunkt und geographischen Ortes von dem Mittel (4a, 4b, 4c, 4d, 4e, 4f, 4g, 4h) zum Messen des Volumens V_{batch} einer ursprünglichen Charge eines flüssigen Nahrungsmittelpräparates, die in einen Transporttank (5a, 5b) überführt wird, eingerichtet ist, wobei die Datensammeleinheit (14) auch zum Sammeln von Identitätsdaten und Zeitdaten von dem Mittel (6) zum Registrieren von Daten bezüglich spezifischer Identität eines Transporttanks (5a, 5b) eingerichtet ist, wobei die Datensammeleinheit (14) auch zum Sammeln von Daten bezüglich Teilvolumen und Zeitpunkt von dem Mittel (8) zum Messen eines Volumens Vₒᵤₜ von Teilen flüssiger Nahrungsmittelpräparate, die dem Lagerbehälter entnommen werden, eingerichtet ist, wobei die Datensammeleinheit (14) auch zum Bereitstellen der Daten an eine Berechnungseinheit (15) eingerichtet ist;
ee) eine Berechnungseinheit (15), die zum Bestimmen spezifischer Herkunftsstellen ursprünglicher Chargen eines Teiles eines flüssigen Nahrungsmittelpräparates, das einem Lagerbehälter (7) entnommen wird, als Funktion einer Verarbeitungs- oder Verpackungszeit gemäß dem Verfahren nach einem der Ansprüche 1 bis 2, basierend auf Informationen, die in der Datensammeleinheit (14) bereitgestellt sind, und zum anschließenden Übertragen der Informationen zu einer Datenbankeinheit (16) eingerichtet ist; und
ff) eine Datenbankeinheit (16), die zum Speichern von Informationen, die von der Berechnungseinheit (15) erhalten werden, bezüglich Herkunft ursprünglicher Chargen in einem Teil eines flüssigen Nahrungsmittelpräparates, das einem Lagerbehälter (7) entnommen wird, als Funktion der Verpackungs- oder Verarbeitungszeit eingerichtet ist.

5. System nach Anspruch 4, **dadurch gekennzeichnet, dass** es auch eine Benutzerschnittstelleneinheit (17) umfasst, die zum Freigeben eines Benutzers eingerichtet ist, um Zeitdaten einzugeben, die sich auf eine Verpackung oder Verarbeitung eines flüssigen Nahrungsmittelpräparates beziehen, wobei die Benutzerschnittstelleneinheit (17) auch zum Bereitstellen von Informationen bezüglich einer spezifischen Herkunftsstelle ursprünglicher Chargen entsprechend der eingegebenen Zeitdaten eingerichtet ist.

6. System nach Anspruch 5, **dadurch gekennzeichnet, dass** die Schnittstelleneinheit zum Freigeben des Benutzers eingerichtet ist, um Zeitdaten einzugeben und entsprechende Informationen bezüglich einer spezifischen Herkunftsstelle ursprünglicher Chargen über eine Web-Seite im Internet oder über eine Mobiltelefonanwendung zu erhalten.

7. System nach einem der Ansprüche 4 bis 6, **dadurch gekennzeichnet, dass** das Mittel (4a, 4b, 4c, 4d, 4e, 4f, 4g, 4h) zum Messen des Volumens V_{batch} einer ursprünglichen Charge eines flüssigen Nahrungsmittelpräparates, die in einen Transporttank (5a, 5b) überführt wird, Strömungssensoren oder Volumenmessmittel enthält, und dass das Mittel an dem Transporttank an der spezifischen Herkunftsstelle angeordnet sein könnte.

8. System nach einem der Ansprüche 4 bis 7, **dadurch gekennzeichnet, dass** die spezifischen Herkunftsstellendaten GPS-Daten sind.

9. System nach einem der Ansprüche 4 bis 8, **dadurch gekennzeichnet, dass** das Mittel (6) zum Registrieren von Daten bezüglich der spezifischen Identität eines Transporttanks (5a, 5b) ein automatisches Identifizierungsmittel umfasst, das zum Lesen eines Identifizierungscodemittels auf dem Transporttank (5a, 5b) ausgebildet ist.

10. System nach einem der Ansprüche 4 bis 8, **dadurch gekennzeichnet, dass** das Mittel (6) zum Registrieren von Daten bezüglich spezifischer Identität eines Transporttanks (5a, 5b) ein Mittel zum manuellen Eingeben eines Identifizierungscodes umfasst.

11. System nach einem der Ansprüche 4 bis 10, **dadurch gekennzeichnet, dass** es auch ein Mittel (10) zum Überwachen einer Prozesszeit für den Teil des flüssigen Nahrungsmittelpräparates, der den Lagerbehälter (7) verlässt, umfasst, wobei das Mittel zum Übertragen der Prozesszeitdaten zu der Datensammeleinheit (14) eingerichtet ist.

12. System nach Anspruch 11, **dadurch gekennzeichnet, dass** die Datensammeleinheit (14) zum Bereitstellen der Prozesszeitdaten an die Berechnungseinheit (15) eingerichtet ist, und die Berechnungseinheit (15) zum Berücksichtigen der Verarbeitungszeit in der Bestimmung der spezifischen Herkunft ursprünglicher Chargen eines flüssigen Nahrungsmittelpräparates, das einem Lagerbehälter (7) entnommen wird, eingerichtet ist.

## Revendications

1. Procédé pour déterminer de quels sites d'origine spécifiques une portion d'une préparation alimentaire liquide extraite d'un récipient de stockage (7) provient, ladite préparation alimentaire liquide étant préparée en combinant une pluralité de lots entrants, où chacun desdits lots entrants est composé d'au moins un lot d'origine, où chacun desdits lots d'origine a été produit au niveau d'un site d'origine (3) spécifique, ledit procédé impliquant la détermination du volume (Vₑₙₜᵣₐₙₜ) pour chacun desdits lots d'origine, **caractérisé en ce qu'**il comprend les étapes consistant à :
i) fournir une base de données (16) comprenant les données concernant la composition des lots d'origine (C_{origine}) d'une portion d'une préparation alimentaire liquide à des temps d'extraction spécifiques ainsi qu'au niveau de sites d'origine spécifiques d'où les lots d'origine proviennent, où lesdites données ont été obtenues par un procédé comprenant les étapes consistant à :
a) déterminer le volume (Vₑₙₜᵣₐₙₜ), et la composition de lots d'origine (C_{origine}) pour chaque lot entrant à ajouter à ladite préparation alimentaire liquide dans ledit récipient de stockage, où la composition de lots d'origine (C_{origine}) est assignée à 100 % d'un site spécifique au cas où le lot entrant provient d'un site d'origine spécifique ;
b) directement après l'addition d'un lot entrant à ladite préparation alimentaire liquide dans ledit récipient de stockage, mettre à jour le volume total (V_{prép}), et la composition des lots d'origine (C_{origine}) de la préparation alimentaire liquide dans ledit récipient de stockage, en prenant le volume et la composition des lots d'origine de la préparation alimentaire liquide dans ledit récipient de stockage avant que l'addition dudit lot entrant soit prise en compte ;
c) directement après avoir extrait une portion de ladite préparation alimentaire liquide dudit récipient de stockage, mettre à jour ledit volume total (V_{prép}) de la préparation liquide dans le récipient de stockage ; et
d) enregistrer le temps spécifique où ladite portion de ladite préparation alimentaire liquide a été extraite ainsi que la composition des lots d'origine (C_{origine}) dans une base de données ;
ii) fournir des données identifiant le point de temps spécifique où ladite portion d'une préparation alimentaire liquide a été extraite dudit récipient de stockage (7) ; et
iii) identifier les sites d'origine spécifiques où les lots d'origine contenus dans la préparation alimentaire spécifique ont été produits en utilisant les informations dans ladite base de données.

2. Procédé selon la revendication 1, **caractérisé en ce que** ladite préparation alimentaire liquide est une préparation à base de lait, une préparation à base de jus de fruits ou de légumes, ou une préparation à base d'huile végétale.

3. Procédé selon la revendication 1 ou la revendication 2, **caractérisé en ce que** seuls les sites d'origine spécifiques liés aux lots d'origine présents dans plus d'une quantité minimum spécifiée de la préparation alimentaire liquide sont identifiés.

4. Système pour effectuer un procédé selon l'une quelconque des revendications 1 - 3, ledit système comprenant :
aa) des moyens (4a, 4b, 4c, 4d, 4e, 4f, 4g, 4h) de mesure du volume Vₗₒₜ d'un lot d'origine d'une préparation alimentaire liquide transférée dans un réservoir de transport (5a, 5b) ainsi que d'indication du temps spécifique Tₗₒₜ et du site d'origine spécifique pour le transfert, lesdits moyens étant configurés pour transférer des données concernant le volume, le temps, et le site d'origine spécifique à une unité de recueil des données (14) ;
bb) un moyen (6) d'enregistrement des données concernant une identité spécifique d'un réservoir de transport (5a, 5b) et le temps spécifique où le contenu de la préparation alimentaire liquide dudit réservoir de transport est transféré dans un récipient de stockage (7), ledit moyen étant configuré pour envoyer lesdites données d'identité et lesdites données de temps à une unité de recueil des données (14) ;
cc) un moyen (8) de mesure du volume Vₛₒᵣₜₐₙₜ de portions de préparation alimentaire liquide extraites dudit récipient de stockage (7) et le temps de l'extraction d'une portion de ladite préparation, ledit moyen étant configuré pour envoyer lesdites données concernant le volume de la portion et le temps à une unité de recueil de données (14) ;
dd) une unité de recueil de données (14) configurée pour recueillir des données concernant le volume, le temps et l'emplacement géographique auprès desdits moyens (4a, 4b, 4c, 4d, 4e, 4f, 4g, 4h) de mesure du volume Vₗₒₜ d'un lot d'origine d'une préparation alimentaire liquide transférée dans un réservoir de transport (5a, 5b), ladite unité de recueil des données (14) étant également configurée pour recueillir des données d'identité et des données de temps auprès dudit moyen (6) pour enregistrer des données concernant une identité spécifique d'un réservoir de transport (5a, 5b), ladite unité de recueil de données (14) étant également configurée pour recueillir des données concernant le volume des portions et le temps auprès dudit moyen (8) pour mesurer le volume Vₛₒᵣₜₐₙₜ de portions de préparations alimentaires liquides extraites dudit récipient de stockage, ladite unité de recueil de données (14) étant également configurée pour fournir lesdites données à une unité de calcul (15) ;
ee) une unité de calcul (15) configurée pour déterminer des sites d'origine spécifiques de lots d'origine d'une portion d'une préparation alimentaire liquide extraite d'un récipient de stockage (7) comme une fonction du temps de traitement ou d'emballage selon le procédé selon l'une quelconque des revendications 1 - 2 en fonction des informations fournies dans ladite unité de recueil de données (14), puis pour transférer les informations à une unité de base de données (16) ; et
ff) une unité de base de données (16) configurée pour conserver des information obtenues à partir de l'unité de calcul (15) concernant l'origine des lots d'origine dans une portion d'une préparation alimentaire liquide extraite d'un récipient de stockage (7) comme une fonction du temps d'emballage ou de traitement.

5. Système selon la revendication 4, **caractérisé en ce qu'**il comprend également une unité d'interface utilisateur (17) configurée pour permettre à un utilisateur de saisir des données de temps concernant l'emballage ou le traitement d'une préparation alimentaire liquide, ladite unité d'interface utilisateur (17) étant également configurée pour fournir des informations concernant le site d'origine spécifique des lots d'origine correspondant aux dites données de temps saisies.

6. Système selon la revendication 5, **caractérisé en ce que** l'unité d'interface est configurée pour permettre à l'utilisateur de saisir des données de temps et d'obtenir des informations correspondantes concernant le site d'origine spécifique des lots d'origine via une page Web sur Internet ou via une application pour téléphone mobile.

7. Système selon l'une quelconque des revendications 4 - 6, **caractérisé en ce que** lesdits moyens (4a, 4b, 4c, 4d, 4e, 4f, 4g, 4h) de mesure du volume Vₗₒₜ d'un lot d'origine d'une préparation alimentaire liquide transférée dans un réservoir de transport (5a, 5b) comprennent des capteurs d'écoulement, ou des moyens de mesure du volume, et **en ce que** lesdits moyens pourraient être agencés sur le réservoir de transport ou au niveau d'un site d'origine spécifique.

8. Système selon l'une quelconque des revendications 4 - 7, **caractérisé en ce que** lesdites données du site d'origine spécifique sont des données GPS.

9. Système selon l'une quelconque des revendications 4 - 8, **caractérisé en ce que** ledit moyen (6) d'enregistrement des données concernant une identité spécifique d'un réservoir de transport (5a, 5b) comprend un moyen d'identification automatique adapté pour la lecture d'un moyen de code d'identification sur ledit réservoir de transport (5a, 5b).

10. Système selon l'une quelconque des revendications 4 - 8, **caractérisé en ce que** ledit moyen (6) d'enregistrement des données concernant une identité spécifique d'un réservoir de transport (5a, 5b) comprend un moyen pour saisir manuellement un code d'identification.

11. Système selon l'une quelconque des revendications 4 - 10, **caractérisé en ce qu'**il comprend également un moyen (10) de surveillance du temps de processus pour ladite portion de la préparation alimentaire liquide quittant ledit récipient de stockage (7), ledit moyen étant configuré pour transférer lesdites données de temps de processus à ladite unité de recueil de données (14).

12. Système selon la revendication 11, **caractérisé en ce que** ladite unité de recueil de données (14) est configurée pour fournir lesdites données de temps de processus à ladite unité de calcul (15), et **en ce que** ladite unité de calcul (15) est configurée pour prendre ledit temps de traitement en compte lors de la détermination de l'origine spécifique des lots d'origine d'une préparation alimentaire liquide extraite d'un récipient de stockage (7).
